(19)

Europäisches
Patentamt
European
Patent Office
Office européen
des brevets

(11) **EP 2 898 027 B1**

(12) **EUROPEAN PATENT SPECIFICATION**

(45) Date of publication and mention
of the grant of the patent:
**18.12.2019  Bulletin 2019/51**

(51) Int Cl.:
***C09D 7/43*** *(2018.01)*          ***C09D 7/65*** *(2018.01)*

(21) Application number: **13766919.8**

(86) International application number:
**PCT/EP2013/069028**

(22) Date of filing: **13.09.2013**

(87) International publication number:
**WO 2014/044616 (27.03.2014 Gazette 2014/13)**

(54) **PAINT FORMULATIONS**

BESCHICHTUNGSZUSAMMENSETZUNGEN

FORMULATIONS DE REVETEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **18.09.2012  IT VA20120030**

(43) Date of publication of application:
**29.07.2015  Bulletin 2015/31**

(73) Proprietor: **Lamberti SpA
21041 Albizzate (VA) (IT)**

(72) Inventors:
• **BIASOTTI, Barbara
21031 Gallarate (VA) (IT)**
• **COAREZZA, Roberto
I-21040 Castronno (VA) (IT)**
• **MARGHERITIS, Giampietro
I-21032 Caravate (VA) (IT)**
• **LANGELLA, Valentina
I-20155 Milano (MI) (IT)**
• **GATTI, Barbara
I-20025 Legnano (MI) (IT)**
• **FLORIDI, Giovanni
I-28100 Novara (IT)**

• **LI BASSI, Giuseppe
I-21026 Gavirate (VA) (IT)**

(74) Representative: **Giaroni, Paola
LAMBERTI S.p.A.
Ufficio Brevetti
Via Piave, 18
21041 Albizzate (VA) (IT)**

(56) References cited:
**EP-A1- 0 867 481          EP-A2- 0 323 627
WO-A2-2012/127067      US-A- 3 700 612
US-A- 4 228 277          US-A- 5 179 083**

• **DATABASE CA [Online] CHEMICAL ABSTRACTS
SERVICE, COLUMBUS, OHIO, US; 11 August
1998 (1998-08-11), MOLTENI, G. ET AL:
"Non-cellulosic polysaccharide derivatives in the
formulation of water-based paints",
XP002697831, retrieved from STN Database
accession no. 1998:497108 -& MOLTENI, G. ET
AL: "Non-cellulosic polysaccharide derivatives
in the formulation of water-based paints",
PITTURE E VERNICI EUROPE , 74(9), 17-20
CODEN: PVEUEO, vol. 09, 1998, pages 17-20,
XP009169918,**

**Description**

TECHNICAL FIELD

The present invention relates to paint formulations that exhibit improved performance characteristics due to the presence of a polygalactomannan ether with average D-mannosyl to D-galactosyl unit ratio different from 2:1 as thickening agent.

BACKGROUND OF THE ART

Paints are surface coatings that are applied to substrates and dried to form continuous films for decorative purposes as well as to protect the substrate. Consumer paints are air-drying and primarily decorative architectural coatings applied to interior or exterior surfaces, where the coatings are sufficiently fluid to flow and form a continuous paint film and subsequently dry at ambient temperatures. Industrial maintenance paints are similar coatings applied to substrates in industrial environments to primarily protect the substrate.

Latex paints, also known as emulsion paints and coatings, have captured a significant portion of the indoor and outdoor paint market as a result of the many advantages that such paints have over solvent-based products. They ordinarily comprise organic polymeric binders, pigments, and various paint additives. In dried paint films, the polymeric binder functions as a binder for the pigments and provides adhesion of the dried paint film to the substrate. The pigments may be organic or inorganic and functionally contribute to opacity and color, in addition to durability and hardness, of the dried paint film.

Latex paints require effectiveness in a number of properties to permit proper utilization thereof. For instance, the paint should exhibit a suitable flow out of the storage receptacle as well as adhesion to a brush. Upon application to a surface, the paint should flow and level within the brush stroke or paint roller tracks left on the surface so as to create a uniform coating without streaks therein. Furthermore, a latex paint should exhibit quick drying times to prevent, if applied to a vertical surface, any gravitational pull to cause to run down the target substrate or sag after application. Additionally, paints should show a uniform coloration over the target surface, both in terms of the pigments applied, as well as overall coating. Lastly, it is also preferable that latex paints exhibit a propensity for stability when stored after initial preparation on-site or at a place of purchase/production. In fact phase separation of the paint is highly undesirable as non-uniformity in final applied colorations would most likely result if a phase separation has occurred.

Moreover the paint viscosity during storage must be adequately high to prevent settling, but readily reduced by applied shear to spread and flow evenly. Latex paint should exhibits pseudoplastic behaviour to enable the paint to be applied readily by brush or roller or spray application.

To overcome all these problems, additives are used in the formulation of latex paints acting as rheology modifiers (thickeners). Thickeners are used in numerous products for rheological control purposes and particularly for increasing viscosity and imparting the required rheological properties to the products.

The thickeners for latex paints can be natural polymers, such as guar or xanthan, synthetic polymers, such as polyacrylate or polyurethane based thickener, or semi-synthetic polymers, or chemically modified natural polymers, exhibiting the specific characteristic of bonding and coordinating a large amount of water once they are dissolved in water. Among the chemically modified natural polymers, the thickeners of choice for latex paints have been for a long time the derivatives of cellulose, including carboxymethyl cellulose (CMC), hydroxyethyl cellulose (HEC), ethyl hydroxyethyl cellulose (EHEC), methyl cellulose (MC), methyl hydroxylethyl cellulose (MHEC), hydroxypropyl methyl cellulose (HPMC) ethers alone and blends of them. These polymers thicken the water-phase of the paint and increase the viscosity of the paint overall.

In recent years, associative chemically modified natural polymers have been used, such as hydrophobically modified hydroxyethyl cellulose. These systems associate with themselves and/or the binder to produce very good flow, leveling, and antispattering properties on application. Guar derivatives, such as hydroxyethyl guar or hydroxypropyl guar, are also well known thickeners for latex paints. Like the cellulose derivatives they modify the viscosity and rheology of the paints by imparting pseudoplastic behaviour to the emulsion coating.

EP 323627 describes an aqueous coating composition comprising pigments, fillers, a binder and a guar hydroxypropyl ether with MS 1.0. More generally, EP 323627 relates to modified polygalactomannans containing hydrophilic and hydrophobic substituents for use as thickeners and suspending agents in various fields, "such as hydrocarbon research and production, in textile printing food, paper and pharmaceutics (p. 2, l. 18-19).

Hydrophobically modified locust bean gum ethers are also described as rheology modifiers for paints in US 5179083.

US 3700612 describes aqueous coating compositions comprising pigments and fillers, a binder and polygalactomannan hydroxypropyl ethers with MS 0.1-3.0.

US 3700612 and US 5179083 are completely silent about polygalactomannans from cassia obtusifolia, focusing on the preparation and use of guar ethers, both in the descriptions and in the Examples.

Guar is a polysaccharide belonging to the family of polygalactomannans and is extracted from a leguminosae, "Cyamopsis Tetragonolobus", that grows in the semi-dry region of tropical countries, particularly in India and in Pakistan, and has D-mannosyl to D-galactosyl unit ratio of about 2:1. Like for many other raw materials deriving from agricultural production, cellulose and guar price and availability undergo cyclic fluctuations. As a consequence it is highly desirable to provide alternatives to their use.

It has now been found that ethers of polygalactomannans with an average D-mannosyl to D-galactosyl unit ratio different from 2:1, despite the relevant differences in the molecular structure and rheological characteristics of the starting polygalactomannans, all impart long-term stability to the latex paint formulations while simultaneously according effective flow, leveling, and other important properties to the final product. Moreover latex paint formulations prepared using mixtures of these polygalactomannan ethers and cellulosic thickeners showed further better properties compared with those prepared with the single thickeners.

Ethers of polygalactomannans with an average D-mannosyl to D-galactosyl unit ratio different from 2:1 for use in dry compositions containing a hydraulic binder were already known from WO 2012/127067, that is silent about latex paints formulations containing in particular cassia ethers.

In the present text, with the expression "molar substitution" (MS), we mean the average number of hydroxyalkyl substituents on each anhydroglycosidic unit of the polygalactomannan, which can be measured, for example, by $^1$H-NMR.

With the expression "degree of substitution" (DS), we mean the average number of substituted hydroxyl groups on each anhydroglycosidic unit of the polygalactomannan, which can be measured, for example, by $^1$H-NMR or gas-chromatography.

## SUMMARY OF THE INVENTION

It is therefore an object of the present invention a paint formulation comprising at least one pigment and/or one filler, at least one binder and, as thickening agent, from 0.05 to 7% by weight, preferably from 0.1 to 2 % by weight, of a polygalactomannan ether with average D-mannosyl to D-galactosyl unit ratio different from 2:1.

More specifically, one of the object of the present invention is a paint formulation comprising at least one pigment and/or one filler, at least one binder and, as thickening agent, from 0.05 to 7% by weight, preferably from 0.1 to 2 % by weight, of a cassia gum ether, a polygalactomannan ether with average D-mannosyl to D-galactosyl unit ratio about 5:1 prepared from polygalactomannans obtained from *Cassia obtusifolia* (cassia gum).

## DETAILED DESCRIPTION OF THE INVENTION

Paints are commonly characterized in terms of their pigment volume concentration (PVC), which is the volume relationship of pigment/filler to total solids in the dry paint film. The percent PVC is (the total pigment/filler volume divided by the total volume of pigment/filler and binder in the dry film)∗100. The minimum value of the percent PVC for the paint formulations of this invention is preferably about 15%. The maximum value is preferably about 95%. Typical levels of pigment and binder depend on the type of paint, i.e. gloss, semi-gloss or matte finish. Typically, the paint formulations of the invention, besides the thickening agent, contain: from 1 to 95% by weight, in particular from 5 to 70% by weight, of at least one pigment and/or one filler; from 0.1 to 60% by weight, in particular from 1 to 30% by weight, of binder; also can include from 4.9 to 98.9% by weight, in particular from 10 to 80% by weight, of water.

Polygalactomannan ethers that can be used in the formulations of the invention are hydroxyalkyl ethers of polygalactomannans, e.g. hydroxypropyl ethers and hydroxyethyl ethers, carboxyalkyl ethers of polygalactomannans, e.g. carboxymethyl ethers and carboxyethyl ethers, mixed carboxyalkyl and hydroxyalkyl ethers of polygalactomannans, cationic ethers of polygalactomannans, polygalactomannans or polygalactomannan ethers modified with hydrophobic groups (hydrophobically modified polygalactomannan ethers), such as hydrophobically modified hydroxylalkyl polygalactomannans.

The methods of preparation of polysaccharide ethers is well known in the art.

The polygalactomannan ethers of the invention can be obtained by reacting the hydroxyl groups of a polygalactomannan with average D-mannosyl to D-galactosyl unit ratio different from 2:1 with an etherifying agent.

Polygalactomannans with average D-mannosyl to D-galactosyl unit ratio different from 2:1 are commercially available and known as tara gum, carob gum, cassia gum and fenugreek gum.

The polygalactomannan from tara (tara gum) has average ratio of D-mannosyl to D-galactosyl units of approximately 3:1, the one from locust bean (locust bean gum) has a ratio of about 4:1, the one from cassia (cassia gum) of about 5:1 and the polygalactomannan from fenugreek (fenugreek gum) of about 1:1.

Tara gum is obtained from the kernels of the tara shrub *Caesalpinia spinosa,* sometimes referred to as *Caesalpinia tinctoria* or *Caesalpinia pectinata.* This legume is native of northern regions of Africa and South America. Peru is the primary source of tara gum.

In tara gum the nature of D-galactosyl distribution along the mannan chain has not been fully elucidated, although its rheologic behaviour, and in particular its synergy with xanthan gum, suggests a certain degree of block structure of the galactose substitution.

Locust bean gum (or carob gum) is the refined endosperm of the seed of the carob tree, which is known botanically as *Ceratonia siliqua L.* The tree mainly grows in Mediterranean countries.

Locust bean gum has fewer D-galactosyl side groups than does tara gum, with a D-mannosyl to D-galactosyl unit ratio averaging about 4:1. The D-galactosyl side groups are clustered in blocks of about 25, thus creating long regions of unsubstituted mannan backbone.

This peculiar structure is believed to account for the relevant differences in properties between guar gum and locust bean gum. By way of example, differently from guar, locust bean gum is only slightly soluble in cold water.

Cassia gum derives from the endosperm of *Cassia obtusifolia* (also known as *Senna obtusifolia* or *Cassia tora).* *Cassia obtusifolia,* Caesalpiniaceae, is a wild crop and grows in most parts of India as a weed. Cassia grows in hot, wet, tropical climates both wild and commercially. Cassia gum is not soluble in cold water and it forms low viscosity solutions in water only by swelling in water after it is heated.

On the other hand, fenugreek gum is soluble in cold water but provides aqueous solutions with relatively low viscosities too. Fenugreek gum is a polygalactomannan extracted from the seeds of fenugreek plant *(Trigonella foenum-graecum).* Fenugreek is an erect annual herb of the bean family that is indigenous to western Asia and southeastern Europe. The different characteristics of the above described galactomannans appear in the following table:

|  | Approx. D-mannosyl to D-galactosyl unit ratio | Solubility in water at 25°C (1% wt) | Solubility in water at 85°C (1% wt) | Viscosity 1% wt in water* (mPa∗s) |
|---|---|---|---|---|
| Fenugreek gum | 1:1 | complete | complete | 1850 |
| Guar gum | 2:1 | complete | complete | 5000 |
| Tara gum | 3:1 | 80% | complete | 5800 |
| Locust bean gum | 4:1 | 15% | complete | 2940 |
| Cassia gum | 5:1 | Non soluble | complete | 150 |

* Brookfield® viscosity at 20 rpm, 20°C after complete dissolution

Although guar gum, tara gum, locust bean gum, cassia gum and fenugreek gum all belong to the polygalactomannan family, each of them show a peculiar rheology and even different solubility in water. Nonetheless, it has surprisingly been found that they are all suitable for the preparation of ether derivatives, that can be used advantageously as rheology modifiers in paint formulations.

Polygalactomannans ethers obtained from *Cassia obtusifolia* in particular, revealed to impart to paints superior viscosity stability than guar ethers and a suitable rheology profile.

For the realization of the present invention, the preferred polygalactomannans with average D-mannosyl to D-galactosyl unit ratio different from 2:1 are therefore the polygalactomannans obtained from *Cassia obtusifolia* (cassia gum).

For the preparation of the polygalactomannan ethers of the invention the polygalactomannan with average D-mannosyl to D-galactosyl unit ratio different from 2:1 is usually swelled or suspended in water or in a water/water-soluble solvent mixture with the etherifying agent in the presence of an alkaline catalyst. Suitable water-soluble solvents for the etherification can be methanol, ethanol and secondary lower alkanols, such as isopropanol, sec-butanol, sec-amyl alcohol, or tertiary lower alkanols. The alkaline catalysts are in general alkali metal or alkaline earth metal hydroxides, such as sodium, potassium or calcium hydroxide. Suitable etherifying agents for the preparation of hydroxyalkyl ethers of polygalactomannans can be alkylene oxides, e.g., ethylene oxide, propylene oxide, butylene oxide to obtain hydroxyethyl polygalactomannans, hydroxypropyl polygalactomannans or hydroxybutyl polygalactomannans.

Halo-carboxylic acids such as monochloroacetic acid or its salts can be used for the preparation of carboxyalkyl ethers. Cationic ethers can be prepared using tertiary amino or quaternary ammonium alkylating reagents such as 2-dialkylaminoethyl chloride, 3-chloro-2-hydroxypropyltrimethyl ammonium chloride and 2,3-epoxy-propyltrimethyl ammonium chloride.

Mixed ethers can be prepared adding mixtures of the mentioned etherifying agents, i.e. propylene oxide and monochloroacetic acid.

The procedure for the preparation of hydrophobically modified polygalactomannans ethers is known in the art, by way of example it is described in EP 323627 and EP 1786840.

Typical etherifying agents bringing a hydrophobic group include alkyl halides and epoxides, such as alkyl epoxides and alkyl glycidyl ethers, that contain a $C_3$ - $C_{24}$ hydrocarbon group.

A suitable glycidylether hydrophobizing agent can be, for example, butyl glycidyl ether, t-butyl glycidyl ether, 2-ethylhexyl glycidyl ether, dodecyl glycidyl ether, hexadecyl glycidyl ether, behenyl glycidyl ether, phenyl glycidyl ether, benzyl glycidyl ether, triphenylmethyl glycidyl ether, nonylphenyl glycidyl ether, and allyl glycidyl ether. Representative alkyl epoxides include but are not limited to 1,2-epoxyethylbenzene, 1,2-epoxybutane, 1,2-epoxypentane, 1,2-epoxyhexane, 1 ,2-epoxyoctane, 1,2-epoxydecane, 1,2-epoxy dodecane, 1,2-epoxytetradecane, 1 ,2-epoxy hexadecane, 1,2-epoxyoctadecane and 1 ,2-epoxyeicosane.Exemplary halide hydrophobizing agents include but are not limited to ethyl, propyl, isopropyl, n-butyl, t-butyl, pentyl, neopentyl, hexyl, octyl, decyl, dodecyl, myristyl, hexadecyl, stearyl and behenyl bromides, chlorides, and iodides. More specific details about the preparation of the polygalactomannan ethers suitable for the realization of the present invention can be found in the literature, for example, in "Industrial Gums: Polysaccharides and their Derivatives", 3rd Ed., Whistler, Roy L., and BeMiller, James N., Academic Press (1993).

The hydroxyalkyl ethers of polygalactomannans with average D-mannosyl to D-galactosyl unit ratio different from 2:1 may have molar substitution (MS) comprised between 0.1 and 3.0, preferably between 0.1 and 2.0, more preferably between 0.1 and 1.7.

The carboxyalkyl ethers may have degree of substitution (DS) from 0.1 to 1.5, preferably from 0.1 to 1.0.

The mixed hydroxyalkyl and carboxymethyl ethers may have a MS and DS comprised in the same range of the mono-ethers.

The cationic polygalactomannans with average D-mannosyl to D-galactosyl unit ratio different from 2:1 may have a cationic degree of substitution of from 0.05 to 1.5.

The hydrophobically modified polygalactomannans of the invention may have hydrophobic degree of substitution (DS) of from $1*10^{-1}$ to $5*10^{-1}$, preferably from $1*10^{-4}$ to $1*10^{-1}$.

The hydrophobically modified polygalactomannans ethers may have, for example, molar hydroxyalkyl substitution from 0.1 to 3.0, preferably from 0.7 to 2.0, and contains an average of from $10^{-5}$ to $5*10^{-1}$, preferably from $10^{-4}$ to $1*10^{-1}$, of hydrophobic groups per anhydroglycosidic unit.

The hydrophobically modified polygalactomannans and polygalactomannan ethers of the invention contain $C_3$-$C_{24}$, preferably a $C_6$-$C_8$, alkyl chain as hydrophobic group.

More preferably the hydrophobic group is a 2-ethylhexyl group.

In a preferred embodiment, the ether of polygalactomannan with average D-mannosyl to D-galactosyl unit ratio different from 2:1 has been treated during the preparation process with a small amount of crosslinking agent and thus contains from 0.01 to 0.05% by weight, preferably from 0.02 to 0.04% by weight, of crosslinking agent. The preferred crosslinking agent is glyoxal.

A 2% by weight aqueous solution of the polygalactomannan ether to be used in the invention preferably exhibits a RVT Brookfield® viscosity not lower than 500 mPa*s at 20°C and 20 rpm. The polygalactomannan ether of the disclosure preferably passes for 95% of their weight through a 60 mesh standard sieve.

For the preparation of the polygalactomannan ethers of the present invention cassia gum, which exhibits higher stability over the time in paint formulations, is the preferred polygalactomannan and hydroxypropyl cassia, carboxymethyl hydroxypropyl cassia and hydrophobically modified hydroxypropyl cassia are the preferred polygalactomannan ethers.

According to one of the embodiments of the invention the cassia gum ether is a hydroxyalkyl cassia gum ether that comprises unsubstituted linear or branched $C_6$-$C_8$ alkyl chains with alkyl degree of substitution from 0.005 to 0.10. A specially preferred polygalactomannan ether is 2-hydroxypropyl-2-hydroxy-3-(2-ethylhexyloxy) propyl cassia gum which is specially suitable for the preparation of non-drip paints.

Another advantage of the polygalactomannan ethers of the present invention is the fact that they can be used in crude form as they guarantee good performances without the need of a purification step after their preparation, and, as a consequence, they are obtainable at a substantially low factory cost.

In a preferred embodiment the paint formulations of the invention contain from 0.05 to 7 % by weight of an additional thickener. The ratio by weight between the ethers of polygalactomannans with average D-mannosyl to D-galactosyl unit ratio different from 2:1 and the additional thickener should be in the range between 20/80 and 80/20, preferably between 25/75 and 60/40. Examples of additional thickeners, which may also be utilized in these paint formulations, are: cellulose derivatives, such as carboxymethyl cellulose (CMC), hydroxyethyl cellulose (HEC), ethyl hydroxyethyl cellulose (EHEC), methyl cellulose (MC), methyl hydroxyethyl cellulose (MHEC), hydroxypropyl methyl cellulose (HPMC), hydrophobically modified hydroxyethyl cellulose (HMHEC); guar or guar derivatives, such as carboxymethyl guar (CMG), hydroxypropyl guar (HPG) and hydrophobically modified HPG; dextrins or cyclodextrins, starch and starch derivatives, especially degraded starch, xanthan, polyacrylates, polyetherpolyols or polyurethane derivatives, partially hydrolysed polymers of vinyl acetate, which are hydrolysed to the extent of more than 70%, and/or vinyl alcohol copolymers, preferably copolymers of vinyl acetate and alkylvinyl ester, which are partly or fully saponified, and also polyvinyl alcohol itself, polymers of N-vinylpyrrolidone or its copolymers with vinyl esters. Preferred additional thickeners are cellulose derivatives and carboxymethyl cellulose and hydroxyethyl cellulose are particularly preferred.

In accordance with the invention, there is no need to impose any restriction regarding the selection of suitable compounds to be used as pigments/fillers, binders or any other additives of the paint formulations of the invention. Pigments and fillers suitable for the present invention include those known from the prior art. Examples of suitable pigments are inorganic white pigments, inorganic chromatic pigments, organic pigments, carbon blacks and inorganic black pigments. As inorganic white pigments, mention should be made in particular of oxides, such as titanium dioxide, zinc oxide (ZnO, zinc white), zirconium oxide, carbonates such as lead white, sulfates, such as lead sulfate; titanium dioxide is particularly preferred. As inorganic chromatic pigments, mention should be made of those from the group of oxides and hydroxides in the form of their individual inorganic compounds or mixed phases, especially iron oxide pigments, chromium oxide pigments and oxidic mixed-phase pigments with rutile or spinel structure. Examples of iron oxide pigments are Colour Index Pigment Yellow 42 and Pigment Red 101. Examples of chromium oxide pigments are Colour Index Pigment Green 17 and Pigment Green 18. Examples of oxidic mixed-phase pigments are nickel-titanium yellow and chromium-titanium yellow, cobalt green and cobalt blue. Examples of inorganic black pigments that should be mentioned include those as already described above together with the inorganic chromatic pigments, in particular black iron oxide and black oxidic mixed-phase pigments. Examples of preferred organic pigments are those of the monoazo, disazo, azo-lake, beta-naphthol, azo metal complex series, and also polycyclic pigments such as those from the phthalocyanine, quinacridone, and thioindigo series. Also suitable as organic pigments are lake-dyes such as Ca, Mg and Al lake-dyes containing sulphonic acid or carboxylic acid groups, and also carbon blacks. Mention should be made in particular of carbon blacks obtained by the furnace black process, and also chemically surface-modified carbon blacks, such as sulpho- or carboxyl-containing carbon blacks.

Fillers, also called extender pigments, comprise substances other than the pigments mentioned, these substances being primarily light in color and being inert towards the binder component. With particular preference, the fillers have a lower optical refractive index than the aforementioned white pigments. Examples of inorganic fillers that may be mentioned include carbonates, such as chalk, calcite or dolomite, silicon dioxide (ground quartz), natural or synthetic silicas, silicates, such as talc, kaolin or mica, and sulfates such as barium sulfate. Examples of organic fillers include polymeric powders and those known as hollow spheres.

The binder may be any standard type and may include different binder materials. Suitable binders include both organic and inorganic compounds. Preferred organic binders are water-soluble, water-dispersible or water-emulsifiable, natural, natural-modified or synthetic, film-forming compounds. Examples of natural binders include natural resins, such as rosin or schellac, natural oils, especially oils containing fatty acids which are saturated or contain various degrees of unsaturation, said oils being oxidatively drying if desired, such as linseed oil, ricinene oil, soya oil, castor oil, and the like.Modified natural binders are, in particular, chemically modified natural resins, e.g. rosin-maleate resin, and also modified oils, e.g. isomerized oils, styrenated and acrylated oils, and also cellulose derivatives such as cellulose nitrates, cellulose esters of organic acids. Examples of synthetic binders are saturated polyesters obtained by polyesterifying bifunctional or higher polyfunctional alcohols with polyfunctional saturated-aliphatic, cycloaliphatic or aromatic carboxylic acids and/or their anhydrides. Further synthetic organic binders are alkyd resins (polyesters modified with unsaturated fatty acids, fatty oils or higher synthetic carboxylic acids) and also chemically modified alkyd resins, examples being styrenated, acrylated or urethanized.Further suitable organic binders include acrylic resins (polyacrylates) in the form of their homopolymers and copolymers, e.g. styrene acrylate, and also polyacrylic polyols.

Water-dilutable acrylic resins are particularly preferred.

As additives, the paint formulations of the invention may optionally comprise surface-active agents and defoamers. Surface-active agents used are preferably dispersants, wetting agents and emulsifiers as widely used in the commercially paint and coating materials. In particular, they may be nonionic, anionic, cationic or amphoteric, and monomeric or polymeric, in nature. Certain suitable thixotropic agents may also be included within these paint formulations as well. These would include, without limitation, phyllosilicates, pyrogenic silicas, and organic compounds based, for example, on high molecular mass polyolefins, hydrogenated castor oil, polyamides or polyacrylates. Suitable defoamers include those based on natural oils or mineral oils, chemically modified silicones and silica materials.

Besides the above mentioned additives, the paint formulations may include other standard paint additives and adjuvants, such as water-softeners, pH regulators, further film-forming and levelling assistants, dryers (siccatives), anti-skinning agents, anti-fouling agents, UV protectants and stabilizers, biocides, and the like. Solvents may also be present within these paint formulations. Preferred solvents include water-soluble or water-miscible solvents. The solvent may serve either as a cosolvent for the latex components or as an auxiliary for improving the drying and film-forming (coalescing) properties of the paint and coating materials. Also suitable are mixtures of different solvents, and, where appropriate, also polymeric, high-boiling solvents having a boiling point of more than 250 °C. Solvents that can be used in the formulations of the invention are, for example, compounds from the group of the aliphatic, cycloaliphatic or aromatic hydrocarbons and terpene hydrocarbons, and also alcohols, glycol ethers and polyglycol ethers, esters and ketones. Amine-type solvents are also suitable, especially those based on primary, secondary and tertiary, aliphatic and also aromatic or cycloaliphatic amines, and also mixtures and derivatives thereof.

The amount of solvent introduced where appropriate in the system of the invention is guided by the desired processing properties and by the use of the paint formulations and also by environmental aspects of the application. The above mentioned solvents may also function as diluents for the paint formulations. Generally the solvent content is preferably less than 55 % by weight, in particular less than 30 % by weight.

The paint formulations of the invention can be provided both as dry mix or as latex paint formulations, in particular waterborne latex paint formulations.

Latex paints formulations are liquid systems that are generally manufactured by a two-step process. First, a dispersion phase, commonly referred to as the grind phase, is prepared by mixing dry paint pigments with a portion of the liquid paint components, including also most other solid powder formulation materials, under constant high shear agitation to provide a high viscosity and high solids mixture. The second step of the paint manufacturing process is commonly referred to as the letdown or thindown phase, because the viscous grind is diluted with the remaining formulation components, which are generally less viscous or less stable to high shear than the grind mix.

The paint formulations of the invention can be used for the preparation of many different kinds of paints, such as dispersion paints, wall paints, interior paints, rub-fast paints, washable paints, emulsion paints, brilliant paints, super-brilliant paints, satin paints, exterior paints, facade paints, filler paints, silicate paints, single-layer paints, double-layer paints, solvent paints, structural paints, concrete coatings, spray paints, primers, sand paints etc.

EXAMPLES

*Polygalactomannan Ethers Thickeners*

Table 1 shows the ethers of polygalactomannans with average D-mannosyl to D-galactosyl unit ratio different from 2:1 which have been utilized for the preparation of latex paint formulations of the Examples. $C_8$ and $C_{16}$ hydrophobically modified hydroxypropyl polygalactomannans were prepared using 2-ethylhexyl glycidyl ether and hexadecyl glycidyl ether as hydrophobizing agents.

The performances and stability of the thickeners of the present invention are compared with the same properties of a hydroxypropyl guar and a hydrophobically modified ($C_{16}$) hydroxypropyl guar commonly used in the field.

The RVT Brookfield® viscosities of the thickeners were determined in a 2 % by weight aqueous solutions at 20 °C and 20 rpm.MS and DS (carboxymethyl and ethylhexyl) were determined by $^1$H-NMR.

The degree of hydrophobic $C_{16}$ substitution was determined by applying the Zeisel method (K. L. Hodges, W. E. Kester, D. L. Wiederrich, and J. A. Grover, Determination of Alkoxyl Substitution in Cellulose Ethers by Zeisel-Gas Chromatography, Analytical Chemistry, Vol. 51 (No. 13), November (1979) pp. 2172- 2176).

The viscosity and the storage stability were determined on waterborne paints with a PVC of 80 comprising the thickeners described in Table 1 and prepared with the commercially available ingredients reported in Table 2.

For each thickener 1200 grams of latex paints were prepared according to the following procedure:

- all the ingredients of phase A were weighed in a plastic beaker and mixed stirring gently using a rod stirrer;
- after 5 minutes, the thickener (phase B) was gradually poured into the mixture;
- after 10 minutes, the pigments/fillers (phase C) were added in the order as reported in Table 2 and dispersed at high speed for 15 minutes;
- at the end of the dispersion, the speed of the stirrer was reduced and the last ingredients of the formulations (phase D) were introduced into the mixtures;
- after 5 minutes of homogenization each latex paint was cooled at room temperature.

24 hours later, each latex paint formulation was divided in two aliquots that were stored at 20 °C and 50 °C respectively.

Table 1

| Thickener | Thickener Identity | MS | DS | Viscosity (mPa∗s) |
|---|---|---|---|---|
| HPF1 | Hydroxypropyl Fenugreek | 0.2 | | 7600 |
| HPF2 | Hydroxypropyl Fenugreek | 0.6 | | 5340 |
| EHHPCa | Hydroph. Mod. ($C_8$) Hydroxypropyl Cassia | 1.7 | 0.051 | 8960 |
| HMHPCa | Hydroph. Mod. ($C_{16}$) Hydroxypropyl Cassia | 1.1 | $7*10^{-4}$ | 5240 |
| HPCa1 | Hydroxypropyl Cassia | 0.9 | | 4990 |

(continued)

| Thickener | Thickener Identity | MS | DS | Viscosity (mPa∗s) |
|---|---|---|---|---|
| HPCa2 | Hydroxypropyl Cassia | 1.7 | | 2640 |
| CMHPCa | Carboxymethyl Hydroxypropyl Cassia | 0.3 | 0.12 | 1530 |
| EHHPL | Hydroph. Mod. ($C_8$) Hydroxypropyl Locust bean | 1.85 | 0.03 | 6270 |
| HPT | Hydroxypropyl Tara | 0.15 | | 27900 |
| HPG* | Hydroxylpropyl Guar | 1.2 | | 8500 |
| HMHPG* | Hydroph. Mod. ($C_{16}$) Hydroxypropyl Guar | 1.5 | $5*10^{-4}$ | 8800 |
| *comparative | | | | |

Table 2

| | Ingredients | Weight (%) |
|---|---|---|
| Phase A | Water | Up to 100 |
| | Na-hexametaphosphate (10% sol.) | 1 |
| | Biocide | 0.2 |
| | Polyacrylic dispersant | 0.3 |
| | Ethylene Glycol | 0.5 |
| | Antifoam | 0.1 |
| Phase B | Thickener | see Table 3 |
| Phase C | Titanium Dioxide | 10 |
| | Calcined Kaoline | 6 |
| | Amorphous $CaCO_3$ | 20 |
| | Crystalline $CaCO_3$ | 25 |
| Phase D | Ammonia (25% sol.) | 0.2 |
| | Vinyl Versatate binder | 10 |
| | Antifoam | 0.1 |
| | Coalescing Agent | 0.3 |

The performances of each thickener was evaluated determining the Brookfield RVT® viscosity at 20 rpm and 20 °C ($V_0$) of the corresponding latex paint after 24 hours from the preparation. The storage stability can be determined by comparison of the initial viscosity $V_0$ with the Brookfield RVT® viscosity (20 rpm and 20 °C) determined after 10 days on the samples stored at 50 °C ($V_{10}$).

A low difference (∆%) between $V_0$ and $V_{10}$ is a demonstration of high stability of the thickener in the latex paints.

The results are reported in Table 3.

The results show that ethers of polygalactomannans with average D-mannosyl to D-galactosyl unit ratio different from 2:1, in particular those obtained from Cassia gum, have in paint formulations properties comparable or better than those of guar derivatives.

Table 3

| Latex Paint Formulations | Thickener | Thickener (%) | $V_0$ (mPa∗s) | $V_{10}$ (mPa∗s) | ∆% |
|---|---|---|---|---|---|
| 1 | HPF1 | 0.6 | 13360 | 10360 | 22,5 |
| 2 | HPF2 | 0.6 | 9960 | 8040 | 19,3 |
| 3 | HPCa1 | 0.6 | 15940 | n.d. | - |

(continued)

| Latex Paint Formulations | Thickener | Thickener (%) | $V_0$ (mPa∗s) | $V_{10}$ (mPa∗s) | Δ% |
|---|---|---|---|---|---|
| 4 | HPCa2 | 0.6 | 10560 | 9780 | 7,4 |
| 5 | CMHPCa | 0.6 | 11120 | n.d. | - |
| 6 | HPT | 0.4 | 15750 | 12540 | 20,4 |
| 7 | HPG* | 0.6 | 10640 | 8720 | 18,0 |
| 8 | EHHPL | 0.6 | 9040 | 8020 | 11,3 |
| 9 | EHHPCa | 0.6 | 38150 | n.d. | - |
| 10 | HMHPCa | 0.6 | 15540 | 13880 | 10,7 |
| 11 | HMHPG* | 0.6 | 14300 | 11980 | 16,2 |
| * Comparative<br>n.d. = not determined | | | | | |

*Mixtures of thickeners*

More thickening agent were prepared by mixing some of the polygalactomannan ethers of the invention described in Table 1 with other thickeners. These thickeners were two commercial cellulose derivatives (a carboxymethyl cellulose and a hydroxyethyl cellulose) and hydroxypropyl guar (HPG of Table 1). Table 5 reports the characteristics of the cellulose derivative (MS, DS and Brookfield RVT® viscosity in 2% water solution at 20 °C and 20 rpm) together with the viscosity ($V_0$) of two latex paint prepared as described in Table 2 containing 0.6% by weight of the cellulose derivatives as the thickener.

Table 5

| Thickener | Thickener Identity | MS | DS | Viscosity (mPa∗s) | $V_0$ (mPa∗s) |
|---|---|---|---|---|---|
| CMC | Carboxymethyl Cellulose | | 0.85 | 4800 | 19600 |
| HEC | Hydroxyethyl Cellulose | 4.0 | | 7000 | 19050 |

The mixtures were prepared by simply mixing the powders in plastic bag. The amount of thickeners utilized for the preparation of the mixtures Mix1 -Mix10 are reported in Table 6.

Table 6

| Mixture of Thickeners | Thickener | HPF2 % | HMHPCa % | HPCa1 % | EHHPL % | HPG2 % | CMC % | HEC % |
|---|---|---|---|---|---|---|---|---|
| Mix1 | HPCa/HPG | | | 50 | | 50 | | |
| Mix2 | HPCa/CMC | | | 50 | | | 50 | |
| Mix3 | HPCa/CMC | | | 75 | | | 25 | |
| Mix4 | HPCa/CMC | | | 25 | | | 75 | |
| Mix5 | HPCa/HEC | | | 50 | | | | 50 |
| Mix6 | HPF/CMC | 50 | | | | | 50 | |
| Mix7* | HPG/CMC | | | | | 50 | 50 | |
| Mix8* | HPG/HEC | | | | | 50 | | 50 |
| Mix9 | HMHPCa/CMC | | 50 | | | | 50 | |
| Mix10 | EHHPL/CMC | | | | 50 | | 50 | |
| * Comparative | | | | | | | | |

Each mixture was used in the preparation of latex paints with the same composition as reported in Table 2 and the same procedure described above.

The RVT Brookfield® viscosity ($V_0$) of the paint formulations was determined at 20 °C and 20 rpm 24 hours after the preparation.

The results are reported in Table 7 together with the % increase of the viscosity (% Gain) calculated with the following formula:

$$\% \text{ Gain } = \ (V_0 - V_t / V_t) * 100$$

where $V_t$ is the theoretical viscosity calculated as sum of the viscosity of each component of the mixture weighed for the component concentration in the mixture.

Table 7

| Mixture of Thickeners | Thickener | Thickener (%) | $V_0$ (mPa*s) | % Gain |
|---|---|---|---|---|
| Mix1 | HPCa/HPG | 0,6 | 12640 | -4,9 |
| Mix2 | HPCa/CMC | 0,6 | 22800 | 28,3 |
| Mix3 | HPCa/CMC | 0,6 | 21300 | 48,8 |
| Mix4 | HPCa/CMC | 0,6 | 23350 | 25,0 |
| Mix5 | HPCa/HEC | 0,6 | 19850 | 13,5 |
| Mix6 | HPF/CMC | 0,6 | 18000 | 21,8 |
| Mix 7* | HPG/CMC | 0,6 | 17350 | 14,7 |
| Mix 8* | HPG/HEC | 0,6 | 13900 | -6,4 |
| Mix9 | HMHPCa/CMC | 0,6 | 21000 | 19,5 |
| Mix10 | EHHPL/CMC | 0,6 | 19450 | 35,8 |
| * comparative | | | | |

The results show that the ethers of polygalactomannans with average D-mannosyl to D-galactosyl unit ratio different from 2:1 interact positively with cellulosic thickeners commonly used in the paint field synergistically increasing the viscosity of the latex paints compared with the single thickeners. This interaction is particularly conspicuous when ethers of Cassia gum are mixed with CMC (Mix2-Mix5 and Mix9).

**Claims**

1.   Paint formulations comprising at least one pigment and/or filler, at least one binder and from 0.05 to 7% by weight of a polygalactomannan ether prepared from polygalactomannans obtained from *Cassia obtusifolia* (cassia gum).

2.   The paint formulations of Claim 1 comprising from 0.1 to 2% by weight of the polygalactomannan ether.

3.   The paint formulations of Claim 1 further comprising from 0.05 to 7% by weight of an additional thickener, the ratio between the polygalactomannan ether and the additional thickener being in the range between 20/80 and 80/20.

4.   The paint formulations of Claim 3 wherein the additional thickener is chosen among cellulose derivatives.

5.   The paint formulations of any of Claims from 1 to 4 having a percent pigment volume concentration comprised between 15 and 95%.

6.   The paint formulations of Claim 5 comprising from 1 to 95% by weight of at least one solid pigment and/or one filler and from 0.1 to 60% by weight of binder.

7.   The paint formulations of Claim 6 further comprising from 4.9 to 98.9% by weight of water.

8.  The paint formulations of Claim 1 in which the polygalactomannan ether is chosen among hydroxyalkyl polygalactomannan ethers, carboxyalkyl polygalactomannan ethers, mixed carboxyalkyl and hydroxyalkyl polygalactomannan ethers, cationic polygalactomannan ethers, polygalactomannans or polygalactomannan ethers modified with hydrophobic groups.

9.  The paint formulations of Claim 8 wherein said polygalactomannan ether is hydroxypropyl cassia, carboxymethyl cassia, carboxymethyl hydroxypropyl cassia or hydrophobically modified hydroxypropyl cassia having a hydroxypropyl molar substitution comprised between 0.1 and 3.0, a carboxymethyl degree of substitution comprised between 0.1 and 1.5 and a hydrophobic degree of substitution comprised between $10^{-5}$ and $5*10^{-1}$.

10. The paint formulations of Claim 9 wherein said polygalactomannan ether is 2-hydroxypropyl-2-hydroxy-3-(2-ethylhexyloxy) propyl cassia gum.

**Patentansprüche**

1.  Lackzusammensetzungen, umfassend mindestens ein Pigment und/oder einen Füllstoff, mindestens ein Bindemittel und 0,05 bis 7 Gew.-% eines Polygalactomannanethers aus Polygalactomannanen, die aus *Cassia obtusifolia* (Cassiagummi) gewonnen werden.

2.  Lackzusammensetzungen nach Anspruch 1, umfassend 0,1 bis 2 Gew.-% des Polygalactomannanethers.

3.  Lackzusammensetzungen nach Anspruch 1, ferner umfassend 0,05 bis 7 Gew.-% eines zusätzlichen Verdicktungsmittels, wobei das Verhältnis des Polygalactomannanethers zum zusätzlichen Verdickungsmittel im Bereich zwischen 20/80 und 80/20 liegt.

4.  Lackzusammensetzungen nach Anspruch 3, wobei das zusätzliche Verdickungsmittel aus Zellulosederivaten ausgewählt ist.

5.  Lackzusammensetzungen nach einem der Ansprüche 1 bis 4, aufweisend eine Pigmentvolumenkonzentration von zwischen 15 und 95 %.

6.  Lackzusammensetzungen nach Anspruch 5, umfassend 1 bis 95 Gew.-% von mindestens einem festen Pigment und/oder einem Füllstoff und 0,1 bis 60 Gew.-% Bindemittel.

7.  Lackzusammensetzungen nach Anspruch 6, ferner umfassend 4,9 bis 98,9 Gew.-% Wasser.

8.  Lackzusammensetzungen nach Anspruch 1, wobei der Polygalactomannanether ausgewählt ist aus Hydroxyalkyl-Polygalactomannanethern, Carboxyalkyl-Polygalactomannanethern, gemischten Carboxyalkyl- und Hydroxyalkyl-Polygalactomannanethern, kationischen Polygalactomannanethern, Polygalactomannanen oder mit hydrophoben Gruppen modifizierten Polygalactomannanethern.

9.  Lackzusammensetzungen nach Anspruch 8, wobei der Polygalactomannanether Hydroxypropylcassia, Carboxymethylcassia, Carboxymethylhydroxypropylcassia oder hydrophob modifizierte Hydroxypropylcassia mit einer molaren Hydroxypropylsubstitution zwischen 0,1 und 3,0, einem Carboxymethyl-Substitutionsgrad zwischen 0,1 und 1,5 und einem hydrophoben Substitutionsgrad zwischen $10^{-5}$ und $5*10^{-1}$ ist.

10. Lackzusammensetzungen nach Anspruch 9, wobei der Polygalactomannanether 2-hydroxypropyl-2-hydroxy-3-(2-ethylhexyloxy)propyl-Cassiagummi ist.

**Revendications**

1.  Formulations de peinture comprenant au moins un pigment et/ou une charge, au moins un liant et de 0,05 à 7% en poids d'un éther de polygalactomannane préparé à partir de polygalactomannanes obtenus à partir de *Cassia obtusifolia* (gomme cassia).

2.  Formulations de peinture selon la revendication 1 comprenant de 0,1 à 2% en poids de l'éther de polygalactomannane.

3. Formulations de peinture selon la revendication 1 comprenant en outre de 0,05 à 7 % en poids d'un épaississant supplémentaire, le rapport entre l'éther de polygalactomannane et l'épaississant supplémentaire étant compris entre 20/80 et 80/20.

4. Formulations de peinture selon la revendication 3, dans lesquelles l'épaississant supplémentaire est choisi parmi les dérivés de cellulose.

5. Formulations de peinture selon l'une quelconque des revendications de 1 à 4 ayant une concentration volumique en pourcentage de pigment comprise entre 15 et 95 %.

6. Formulations de peinture selon la revendication 5 comprenant de 1 à 95% en poids d'au moins un pigment solide et/ou une charge et de 0,1 à 60% en poids de liant.

7. Formulations de peinture selon la revendication 6 comprenant en outre de 4,9 à 98,9 % en poids d'eau.

8. Formulations de peinture selon la revendication 1, dans lesquelles l'éther polygalactomannane est choisi parmi les éthers de polygalactomannane hydroxyalkyl, les éthers de polygalactomannane carboxyalkyl, les éthers mixtes de polygalactomannane carboxyalkyl et hydroxyalkyl, les éthers de polygalactomannane cationiques, les éthers de polygalactomannanes ou de polygalactomannanes modifiés avec des groupements hydrophobes.

9. Formulations de peinture selon la revendication 8, dans lesquelles ledit éther de polygalactomannane est la cassia hydroxypropyl, la cassia carboxyméthyl, la cassia hydroxypropyl carboxyméthyl ou la cassia hydroxypropyl hydrophobiquement modifiée ayant une substitution molaire hydroxypropylique comprise entre 0,1 et 3,0, un degré de substitution carboxyméthyle compris entre 0,1 et 1,5 et un degré hydrophobe de substitution compris entre $10^{-5}$ et $5*10^{-1}$.

10. Formulations de peinture selon la revendication 9, dans lesquelles ledit éther de polygalactomannane est de la gomme de cassia propyle 2-hydroxypropyl-2-hydroxy-3-(2-éthylhexyloxy).

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 323627 A
- US 5179083 A
- US 3700612 A
- WO 2012127067 A
- EP 1786840 A

**Non-patent literature cited in the description**

- **WHISTLER, ROY L. ; BEMILLER, JAMES N.** Industrial Gums: Polysaccharides and their Derivatives. Academic Press, 1993
- **K. L. HODGES ; W. E. KESTER ; D. L. WIEDERRICH ; J. A. GROVER.** Determination of Alkoxyl Substitution in Cellulose Ethers by Zeisel-Gas Chromatography. *Analytical Chemistry,* November 1979, vol. 51 (13), 2172-2176